(19) Europäisches Patentamt
European Patent Office
Office européen des brevets

(11) **EP 4 564 301 A1**

(12) **EUROPEAN PATENT APPLICATION**

(43) Date of publication:
**04.06.2025 Bulletin 2025/23**

(21) Application number: **23213823.0**

(22) Date of filing: **01.12.2023**

(51) International Patent Classification (IPC):
**G06T 13/40** $^{(2011.01)}$    **G06T 17/00** $^{(2006.01)}$

(52) Cooperative Patent Classification (CPC):
**G06T 17/00; G06T 13/40;** G06V 40/176

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **TOYOTA JIDOSHA KABUSHIKI KAISHA**
  **Toyota-shi, Aichi-ken, 471-8571 (JP)**
- **Technical University of Munich**
  **80333 München (DE)**

(72) Inventors:
- **GARATTONI, Lorenzo**
  **1140 BRUSSELS (BE)**

- **DAVOLI, Davide**
  **1140 BRUSSELS (BE)**
- **QIAN, Shenhan**
  **80333 MUNICH (DE)**
- **KIRSCHSTEIN, Tobias**
  **80333 MUNICH (DE)**
- **GIEBENHAIN, Simon**
  **80333 MUNICH (DE)**
- **RUBEL, Michael**
  **80333 MUNICH (DE)**
- **NIESSNER, Matthias**
  **80333 MUNICH (DE)**
- **SCHONEVELD, Liam**
  **TOKYO, 155-0031 (JP)**

(74) Representative: **Cabinet Beau de Loménie**
**158, rue de l'Université**
**75340 Paris Cedex 07 (FR)**

(54) **METHOD FOR CREATING A CONTROLLABLE AVATAR**

(57)    A computer-implemented method for creating a controllable avatar of an animated subject from at least one image set (10) of the animated subject, the method comprising:

- associating geometric primitives (22) to a parametric morphable model (20) of the animated subject;
- learning parameters of the associated geometric primitives (22) based on the at least one image set (10).

**FIG.1**

EP 4 564 301 A1

**Description**

BACKGROUND OF THE INVENTION

1. Field of the invention

The present disclosure relates to the field of reconstruction from images and animation, and more particularly to a computer-implemented method for creating a controllable avatar of an animated subject.

2. Description of Related Art

Creating controllable avatars of animated subjects such as articulated objects, body portions, human or animal heads, etc. has been a longstanding problem in computer vision and graphics. In particular, the ability to render photorealistic dynamic avatars from arbitrary viewpoints enables numerous applications in gaming, movie production, immersive telepresence, and augmented or virtual reality. For such applications, it is also crucial to be able to control the avatar, and for it to generalize well to novel poses and expressions.

Reconstructing a 3D representation able to jointly capture the appearance, geometry and dynamics of a subject, for instance a human head, represents a major challenge for high-fidelity avatar generation. The under-constrained nature of this reconstruction problem significantly complicates the task of achieving a representation that combines novel-view rendering photorealism with pose and expression controllability. Moreover, in the case of a human head, extreme expressions and facial details, like wrinkles, the mouth interior, and hair, are difficult to capture, and can produce visual artifacts easily noticed by humans. Similar difficulties, mutatis mutandis, arise for other types of subjects.

In recent years, a number of statistical mesh models have been developed for both full body and head avatar [REF. 3] and [REF 6.]. These models capture the shape and dynamics of the human from 3D scans. They can be easily animated by manipulating parameters that enable the control of pose, expression, and other aspects of the avatars. These methods alone however, cannot produce photorealistic renderings, as they lack highfrequency details, and generally cannot effectively model fine details like hair and clothing wrinkles. Neural Radiance Fields (NeRF [REF. 1]) and its variants have shown impressive results in reconstructing static scenes from multi-view observations. Follow-up works have extended NeRF to model dynamic scenes for both arbitrary and human-tailored scenarios. These works achieve impressive results for novel view rendering; however, they lack controllability and as such do not generalize well to novel poses and expressions. The recent 3D Gaussian Splatting method [REF. 2] achieves even higher rendering quality than NeRF for novel-view synthesis, with real-time performance. This method optimizes for discrete geometric primitives (3D Gaussians) throughout 3D space. This method has been extended to capture dynamic scenes by building explicit correspondences across time steps; however, they do not allow for animations of the reconstructed outputs.

The following references disclose various methods relating to the field of reconstruction from images, animation or human modeling :

[REF. 1] Ben Mildenhall, Pratul P Srinivasan, Matthew Tancik, Jonathan T Barron, Ravi Ramamoorthi, and Ren Ng. NeRF: Representing scenes as neural radiance fields for view synthesis. Communications of the ACM, 65(1):99-106, 2021.

[REF. 2] Bernhard Kerbl, Georgios Kopanas, Thomas Leimkühler, and George Drettakis. 3D Gaussian splatting for real-time radiance field rendering. ACM Transactions on Graphics (ToG), 42(4):1-14, 2023.

[REF. 3] Tianye Li, Timo Bolkart, Michael. J. Black, Hao Li, and Javier Romero. Learning a model of facial shape and expression from 4D scans. ACM Transactions on Graphics, (Proc. SIGGRAPH Asia), 36(6):194:1-194:17,2017.

[REF. 4] Justus Thies, Michael Zollhofer, Marc Stamminger, Christian Theobalt, and Matthias Nießner. Face2face: Real-time face capture and reenactment of rgb videos. In Proceedings of the IEEE conference on computer vision and pattern recognition, pages 2387-2395, 2016.

[REF. 5] Diederik P Kingma and Jimmy Ba. Adam: A method for stochastic optimization. arXiv preprint arXiv: 1412.6980, 2014.

[REF. 6] Matthew Loper and Naureen Mahmood and Javier Romero and Gerard Pons-Moll and Michael J. Black. SMPL: A Skinned Multi-Person Linear Model. ACM Transactions on Graphics, (Proc. SIGGRAPH Asia), 34(6): 248:1---248:16, 2015.

SUMMARY

The object of the present invention is to at least substantially remedy the above-mentioned drawbacks.

In this respect, the present disclosure relates to a computer-implemented method for creating a controllable avatar of an animated subject from at least one image set of the animated subject, the method comprising:

- associating geometric primitives to a parametric morphable model of the animated subject;
- learning parameters of the associated geometric primitives based on the at least one image set.

For conciseness, this method is referred to, hereinafter, as the creating method.

As used herein, for conciseness and unless the context indicates otherwise, "a", "an", and "the" (e.g. image set) are intended to refer to "at least one" or "each" (e.g. image set) and to include plural forms as well. Conversely, generic uses of the plural form may include singular elements.

An avatar may be a digital replication of the subject's appearance. The avatar being controllable means that parameters of the avatar can be changed in order to change the avatar's appearance, as will be detailed hereinafter. The avatar may be a three-dimensional avatar.

The image set may be a single-view image set or a multi-view image set, i.e. an image set in which each element or time step corresponds to a plurality of images of the subject simultaneously taken from a plurality of viewpoints, respectively.

The image set may be acquired, e.g. through an image acquisition module such as a camera, or retrieved as an already acquired image set from a database, e.g. a local or distant server or the like.

Geometric primitives are a representation of local visual information of the avatar. The geometric primitives contain the necessary information to enable, possibly after processing such as image rendering, displaying the avatar. A geometric primitive may be defined by parameters such as a position, an orientation, a shape, a size or scale, a color, an opacity, etc. Examples of geometric primitives include a point cloud, 3D Gaussians ([REF. 2]), other three-dimension probability distributions or even more expressive geometric primitives which may, for instance, bend or stretch. Expressiveness qualifies the ability of the geometric primitive to convey the appearance of the subject.

Besides, the model of the animated subject is parametric and morphable: the model is defined by parameters and changing the parameters of the model and its shape, including pose and expression, enables to control the avatar. In the following, unless the context indicates otherwise, the "model" will refer to the parametric and morphable model of the animated subject. The model may represent a global shape of the animated subject.

For instance, the model may be a surface model in three-dimensions. In these embodiments, each base element (e.g. cell of a mesh) of the model is two-dimensional and has a 3D position and orientation with respect to other elements of the model.

In associating a plurality of geometric primitives to the parametric morphable model, the geometric primitives are rigged to the model. Thus, the geometric primitives add visual information to the model which includes the shape information. In doing so, the geometric primitives together form a dynamic representation. Moreover, the model enables to efficiently and consistently animate the geometric primitives, which would otherwise be too difficult to control.

The learning updates values of the parameters to increase similarity between the controllable avatar and the animated subject. The learning may comprise a plurality of iterations.

As an output of the creating method, the controllable avatar comprises the parametric morphable model associated to the geometric primitives with learned parameters. The geometric primitives are anchored relative to the model and are animated and controlled by the underlying model. A visualization of the avatar, from an arbitrary viewpoint, can be obtained by rendering the geometric primitives associated to the model, which can be performed in real time.

In the proposed creating method, the learning enables to adjust parameters of the geometric primitives, thus compensating for regions where the model is either not accurately aligned, or is incapable of reproducing certain visual elements. This enables to obtain a controllable avatar that is more accurate and realistic than previous work, better performing at tasks such as novel-view rendering (generating an unknown view of the animated subject) and reenactment (making the controllable avatar of a first subject copy the pose and attitude of a second subject).

In some embodiments, one or more of the at least one image set comprises a plurality of successive frames of a video; the image set may be a video. Alternatively, the image set may comprise a plurality of non-successive frames of a video, e.g. selected at a given sampling frequency (e.g. every third frame of the video). Yet alternatively, the image set may comprise one or more static images, e.g. photographs. Using frames from a video enables to take temporal information into account, thus giving access to broader and more detailed information.

Optionally, the associating comprises positioning the geometric primitives in respective local reference frames bound to points of the model, said positioning being defined by values of the parameters. That is, each geometric primitive is anchored to the model, the parameters of the geometric primitive defining the position of the geometric primitive in a local reference frame bound to a point of the model. Thus, the parameters may be referred to as local parameters. The local reference frames may also be referred to as local spaces.

In other words, the parameters may define a static relationship between the respective geometric primitives and the respective local reference frames of the model. Such parameters may include a position, orientation, scale, etc.

A plurality of local reference frames, bound to a plurality of points respectively, may be considered. Two different geometric primitives may be associated to two different local reference frames.

Apart from the updating of parameters that takes place during the learning, the parameters may define a static positioning of the geometric primitives with respect to the local reference frames. In other words, the geometric primitives may be locally static, while in a global space, and considering the morphability of the model, they form a dynamic representation of the animated subject. Therefore, the controllability of the avatar is enhanced.

In addition, learning parameters defining the local positioning of the geometric primitives enables to consider explicit displacement offsets of the geometric primitives, leading to a more accurate geometric representation of the subject.

Optionally, the geometric primitives are discrete. Discrete geometric primitives can be directly associated to the model and explicitly moved during the learning, thereby obviating the need for intermediate spaces such as a canonical space.

Besides, optionally, the model comprises a mesh. As known per se in the art, a mesh is a network of points forming cells in-between neighboring points.

Optionally, the associating comprises allocating each one of the geometric primitives to a cell of the mesh while enabling the geometric primitive to move and deform with the cell.

As the case may be, the respective local reference frames may correspond to the respective cells of the mesh. In the following, cells and local reference frames are used interchangeably, depending on whether the model comprises a mesh or another type of representation.

Optionally, the learning keeps constant the allocation of the geometric primitives to the cells of the mesh. In these embodiments, a geometric primitive remains anchored to the same cell (or more generally to the same local reference frame) throughout the learning. This consistent correspondence between a geometric primitive and a cell provides robustness to the creating method and to the created avatar.

For instance, the parameters of the geometric primitives may include an identifier of a cell of the mesh to which the geometric primitive is allocated, and the identifier is kept constant during the learning.

Optionally, the parameters comprise scaling information of the geometric primitive with respect to a scaling of an associated cell thereof. Thus, the local position and the scaling of a geometric primitive are defined relative to the absolute scale of a cell. This enables an adaptive step size in the metric space with a constant learning rate for parameters defined in the local space. For example, geometric primitives paired with small cells will move slower in a learning iteration step than those paired with large cells.

Optionally, the learning comprises updating values of the parameters in a global reference frame of the model. Although they define local features of the geometric primitives, the parameters are optimized based on what happens in a global space, which improves the performance of the creating method.

Optionally, the geometric primitives comprise three-dimensional Gaussians. A 3D Gaussian may be defined by parameters such as a center and a covariance matrix. 3D Gaussians are discussed in more details in [REF. 2].

Optionally, the parameters comprise anisotropic scaling information. That is, the geometric primitive may deform differently in different directions. Anisotropic scaling makes the geometric primitive more expressive and enables to avoid dotted artifacts.

Optionally, the geometric primitives jointly encode a texture and a lighting of the animated subject. Since the texture and lighting are encoded jointly, fine details of the subject can be modelled more precisely in the avatar, so that the avatar is more realistic.

Optionally, the creating method comprises adapting a local density of the geometric primitives. Adapting a local density of the geometric primitives may include locally adding or removing one or more geometric primitives. Overall, the adapting may change the number of geometric primitives associated to one or more local reference frames or cells of the mesh.

Adapting a local density may be carried out whenever desired, e.g. during the learning (e.g. between some iterations of the learning). The adapting may be carried out for the first time after a certain number of iterations, to enable the geometric primitives to be somewhat optimized before trying to improve their density. The adapting may be carried out once or several times. For instance, two successive occurrence of adapting may be separated by a plurality of learning iterations, in order to leave enough time for the parameters to be improved by learning before re-assessing the density.

Optionally, the adapting comprises adding a second geometric primitive to a local reference frame already having a first geometric primitive allocated thereto. Thus, density is increased for better modeling of details of the animated subject. This reduces blurry renderings.

Optionally the second geometric primitive is allocated to said local reference frame. That is, both the first geometric primitive and the second geometric primitive are allocated to the same local reference frame. However, the respective parameters of the first and second geometric primitives may define different position, orientation, scale, etc. of those first and second geometric primitives in that local reference frame.

Allocating the second geometric primitive to the same local reference frame as the first geometric primitive, referred to hereinafter as binding inheritance, enables to refine the avatar without losing controllability, thus leading to significant fidelity improvements.

Optionally, the adapting comprises pruning geometric primitives. Thus, density is reduced where it was unnecessarily high. Optionally, the adapting comprises checking that the pruning does not remove a last geometric primitive of a cell, so that each cell remains associated with at least one geometric primitive. When it is determined that the geometric primitive to be pruned is the last geometric primitive of a cell, the pruning may be cancelled for that geometric primitive. This avoids unwanted artifacts in the avatar.

Optionally, the learning comprises rendering an image based on values of the parameters of the associated geometric primitives at a current iteration, comparing the rendered image with a ground-truth image from the at least one image set, and updating the values of the parameters to increase similarity between the rendered image and the ground-truth image. More generally, the learning of the parameters may be self-supervised based on the input image set. As mentioned above, the learning may comprise a plurality of iterations including the aforementioned steps, each iteration basing on the parameter values updated at the preceding iteration. A loss function defining the similarity between the rendered image and the ground-truth image can be defined appropriately by the skilled person. Optionally, the similarity considered may be a global similarity. Thus, while the parameters are defined locally, they are learned on the basis of a global similarity assessment.

Optionally, the creating method comprises obtaining the parametric morphable model of the animated subject from the at least one image set. Obtaining such a model may be based on computer vision algorithms and/or machine learning, and may depend on the type of animated subject.

Optionally, the learning comprises fine-tuning parameters of the parametric morphable model and/or parameters of a model configured to obtain the parametric morphable model of the animated subject from the at least one image set, optionally jointly and end-to-end with the learning of the parameters of the associated geometric primitives. This improves image quality, all the more so when the geometric primitives are consistently allocated to local reference frames or, as the case may be, cells of the mesh.

Optionally, a loss function used in the learning comprises at least one of a position term penalizing a distance between a geometric primitive and a cell associated thereto, and a scaling term penalizing a scaling difference between a geometric primitive and a cell associated thereto. The position term ensures that a geometric primitive is not too far away from a cell associated thereto, and the scaling term ensures that a geometric primitive keeps a size consistent with that of the associated cell. Both, independently, enhance the visual consistency and robustness of the created avatar, and avoid artifacts.

Optionally, at least one of the position term and/or the scaling term includes a tolerance under which said term has a fixed value. Thus, if the position/scaling term is less than a predetermined value (namely, the tolerance), it is replaced by a fixed value. This may be efficiently implemented by a "max" function and avoids degenerating effects of these terms, as will be detailed later.

Optionally, regularization of the position term and/or the scaling term is carried out for visible portions of the model and ignored for invisible portions of the model. This helps to maintain the learned structure of occluded portions.

The present disclosure is further directed to a device for creating a controllable avatar of an animated subject from at least one image set of the animated subject, the device comprising a processor configured to:

- associate geometric primitives to a parametric morphable model of the animated subject;
- learn parameters of the associated geometric primitives based on the at least one image set.

The device may be configured to carry out the above-mentioned creating method, and may have part or all of the above-described features. The device may have the hardware structure of a computer.

The present disclosure is further directed to a system comprising the above-described device equipped with a video or image acquisition module to obtain the at least one image set. The video or image acquisition module may be a camera or the like.

The present disclosure is further related to a computer program set including instructions for executing the steps of the above described creating method when said program is executed by at least one computer. This program set can use any programming language and take the form of source code, object code or a code intermediate between source code and object code, such as a partially compiled form, or any other desirable form.

The present disclosure is further related to a recording medium readable by at least one computer and having recorded thereon at least one computer program including instructions for executing the steps of the above described creating method. The recording medium can be any entity or device capable of storing the program. For example, the medium can include a mass memory device, such as hard drive. In general, mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks.

Alternatively, the recording medium can be an integrated circuit in which the program is incorporated, the circuit being adapted to execute the method in question or to be used in its execution.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

Fig. 1 is a diagram illustrating steps of a creating method according to an embodiment.
Fig. 2 shows examples of reenactment by an avatar obtained by the creating method according to an embodiment.
Figs. 3 and 4 show examples of parametric control of an avatar obtained by the creating method according to an embodiment.

DETAILED DESCRIPTION OF EMBODIMENTS

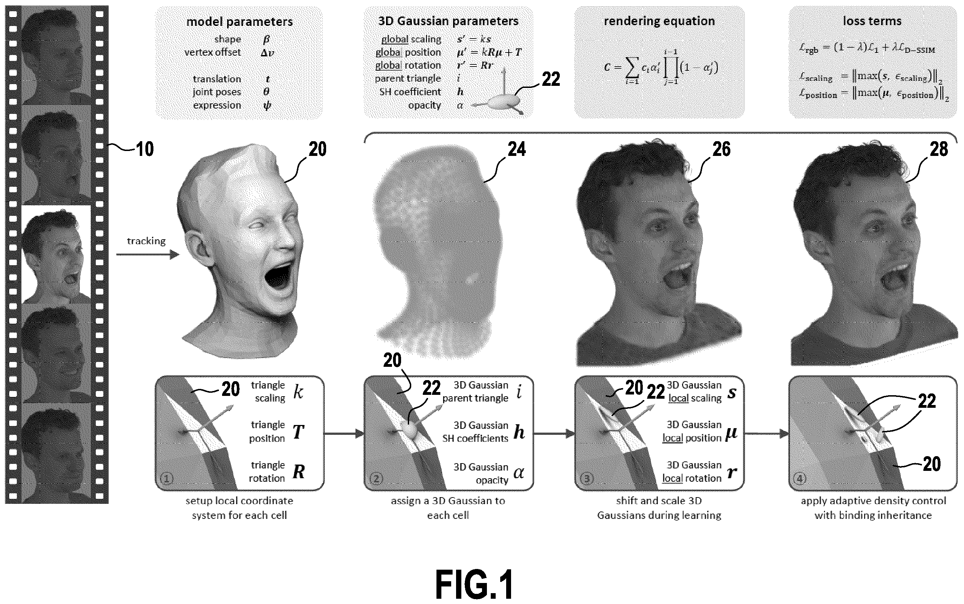

An embodiment of the creating method will be described with reference to Fig. 1. As stated above, the creating method is a computer-implemented method for creating a controllable avatar of an animated subject from at least one image set of the animated subject, the method comprising associating geometric primitives to a parametric morphable model of the animated subject, and learning parameters of the associated geometric primitives based on the at least one image set.

The embodiment shown in Fig. 1 is detailed with the animated subject being a human head. However, the principles explained herein also apply to other animated subjects, such as articulated (including flexible) objects, bodies, animals, plants, etc.

Besides, the embodiment shown in Fig. 1 is detailed with the geometric primitives comprising three-dimensional Gaussians. However, the principles explained herein also apply to other geometric primitives, as mentioned above.

Besides, the embodiment shown in Fig. 1 is detailed with the image set being a video. While a video may be helpful to effectively track a subject to obtain a model thereof, the principles explained herein for the creating method per se do not require a video, and the image set may comprise images of a subject, the images being discontinuous in time and/or viewpoint.

Besides, the embodiment shown in Fig. 1 is detailed with the parametric morphable model comprising a mesh having cells, in particular triangular cells (also referred to herein as triangles). However, the principles explained herein also apply to other shapes of cells (e.g. quadrangular, etc.), and more generally to other types of models.

As shown in Fig. 1, the input to the creating method is an image set, e.g. a video 10, e.g. a multi-view video recording of a human head.

A model of the human head may be obtained by any suitable method. In an example, the model may be obtained in the context of the creating method.

For instance, for each image of the video 10 (e.g. each time step), a subject tracker may be used. In an example, a photometric head tracker based on [REF. 4] is used to fit FLAME [REF. 3] parameters with multi-view observations and known camera parameters. The FLAME meshes have vertices at varied positions but share the same topology. An illustration of the obtained mesh is identified by reference 20 in Fig. 1.

As shown in Fig. 1, the model may be parametrized by a shape $\beta$, a vertex offset $\Delta v$, a translation $t$, joint poses $\theta$ and an expression $\psi$. The shape $\beta$ may be a vector with a length of S, where S is the number of principle components in the shape space of the model (here FLAME). This vector may be used as weights to blend the shape components of FLAME to describe the subject (e.g. a human head) in neutral pose and expression. The vertex offset $\Delta v$ may be a matrix in a size of [V, 3]. The vertex offset $\Delta v$ may describe the offset of each one of the V vertices of the mesh in neutral pose and expression to compensate the limited expressiveness of the shape space of FLAME. The translation $t$ may be a vector with a length of 3. The translation $t$ may describe the global translation of the FLAME mesh in the world coordinate system. The joint poses $\theta$ may be a list of axis-angles that describe the rotations of joints of the subject, e.g. the root node, neck, jaw, left eyeball, and right eyeball. They can be stored as a matrix in a size of [J, 3], where J is the number of joints. The expression $\psi$ may be a vector with a length of E, where E is the number of expression components in the expression space of FLAME. This vector may be used as weights to blend the expression components of FLAME to describe the subject (e.g. a human head) with respect to its neutral pose and expression.

An overview of the creating method according to the present embodiment is as follows: given a model of the animated subject, e.g. the mesh, it is possible to associate geometric primitives to the model, e.g. to build a consistent connection between triangles of the mesh and 3D Gaussians as detailed later. The splats may be rendered into images via a differentiable tile rasterizer [REF. 2]. Parameters of the 3D Gaussians are then learned. For instance, these rendered images (specifically, rendered images based on values of the parameters of the associated geometric primitives at a current iteration) are supervised by the ground-truth images (specifically, ground-truth images from the image set) towards learning a realistic human head avatar. Further improvements will be described, which improve quality of the created avatar.

As regards the geometric primitives, 3D Gaussian Splatting [REF. 2] provides a solution to reconstruct a static scene with anisotropic 3D Gaussians given images and camera parameters. A scene is represented by a set of Gaussians, each defined by a covariance matrix $\Sigma$ centered at point (mean) $\mu$:

$$G(x) = e^{-\frac{1}{2}(x-\mu)^T \Sigma^{-1}(x-\mu)} \tag{1}$$

Covariance matrices have physical meaning only when they are semi-definite, which cannot be guaranteed for an optimization process with gradient descent. Therefore, [REF. 2] first defines a parametric ellipse with a scaling matrix S and a rotation matrix R, then construct the covariance matrix by:

$$\Sigma = RSS^T R^T. \tag{2}$$

Practically, an ellipse may be stored as a position vector $\mu \in \mathbb{R}^3$, a scaling vector $s \in \mathbb{R}^3$, and a quaternion $q \in \mathbb{R}^4$. The quaternion may represent the orientation of the ellipse. In the present disclosure, $r \in \mathbb{R}^{3\times3}$ notates the corresponding rotation matrix to q.

Thus, more generally, the parameters of the geometric primitive may comprise a position, and orientation and a scale of the geometric primitive.

For rendering, the color $C$ of a pixel is computed by blending all 3D Gaussians overlapping the pixel, e.g. through Eq. (3):

$$C = \sum_{i=1} c_i \alpha_i' \prod_{j=1}^{i-1} (1 - \alpha_j'), \tag{3}$$

where $c_i$ is the color of each 3D Gaussian modeled by 3-degree spherical harmonics $h$, which enables to adapt the color based on the viewpoint. The blending weight $\alpha_i'$ is given by evaluating the 2D projection of the 3D Gaussian multiplied by a per-Gaussian opacity $\alpha$. The Gaussians are sorted by depth before blending to respect visibility order.

More generally, the parameters of the geometric primitives may comprise visual information, such as a spherical harmonics coefficient h and an opacity coefficient $\alpha$.

Next, the associating of the 3D Gaussians to the model is described. First, respective local reference frames bound to points of the model are defined. The origin of the local space, or local reference frame, may be the mean position T of the three vertices of a triangle. The direction vector of one edge, the normal vector of the triangle, and their cross product may be taken as vectors forming a base of the local reference frame, namely as column vectors to form a rotation matrix $R$ which describes the orientation of the triangle in the global space. A scale $k$ of the triangle may also be computed, e.g. by the mean of the length of one edge and its perpendicular in the triangle. An example of such a local reference frame is shown in item ① in Fig. 1.

Initially, each triangle of the mesh may be paired with a 3D Gaussian which has the ability to move with the triangle across time steps. In other words, the 3D Gaussian is static in the local space of its parent triangle but dynamic in the global (metric) space as the triangle moves. Thus, the associating comprises positioning the geometric primitives in respective local reference frames. The associating comprises allocating each one of the geometric primitives to a cell of the mesh while enabling the geometric primitive to move and deform with the cell.

The positioning may be defined by values of the parameters. Specifically, for the paired 3D Gaussian of a triangle, its location (position) $\mu$, rotation (orientation) $r$, and anisotropic scaling $s$ are defined all in the local space. Thus, in particular, the parameters comprise scaling information, e.g. the anisotropic scaling $s$, of the geometric primitive with respect to a scaling of an associated cell thereof. The creating method may initialize the location $\mu$ at the local origin, the rotation $r$ as an identity rotation matrix, and the scaling $s$ as a unit vector. The associating and the initial values of the parameters are shown in item ② in Fig. 1, where the 3D Gaussian is shown schematically by reference 22. The 3D Gaussians 22 form a radiance field on top of the mesh 20.

For the learning, and, as the case may be, the rendering, these local properties may be converted into the global space, e.g. by Eq. (4) to (6):

$$r' = Rr, \tag{4}$$

$$\mu' = kR\mu + T, \tag{5}$$

$$s' = ks. \tag{6}$$

This is an example of the learning comprising updating values of the parameters in a global reference frame of the model.

As discussed above, triangle scaling is incorporated in Eqs. (5) and (6) so that the local position and scaling of a 3D Gaussian are defined relative to the absolute scale of a triangle. This enables an adaptive step size in the metric space with a constant learning rate for parameters defined in the local space. This also makes interpreting the parameters regarding the distance from the triangle center easier.

Only having the same numbers of Gaussians as the triangles may be insufficient to capture details of the animated subject. For instance, representing a curved hair strand requires multiple splats, while a triangle on the scalp may intersect with several strands. Therefore, the creating method may comprise adapting a local density of the geometric primitives. Such an adapting, also referred to as adaptive density control, adds and removes splats, e.g. based on the view-space positional gradient and the opacity of each Gaussian.

For instance, the adapting comprises adding a second geometric primitive to a local reference frame already having a first geometric primitive allocated thereto. Specifically, each 3D Gaussian with a large view-space positional gradient may be split into two smaller ones if it is large or cloned if it is small. This adding may be conducted in the local space, and the creating method may ensure that a newly created Gaussian is close to the old one that triggers this densification operation.

Optionally, the second geometric primitive is allocated to the same local reference frame as the first geometric primitive. That is, the new 3D Gaussian is allocated to the same triangle as the old one because it was created to enhance the fidelity of the local region. Therefore, in embodiments, each 3D Gaussian carries one more parameter, namely the index $i$ (or more generally an identifier) of its parent triangle (i.e. the cell to which it is allocated), to enable binding inheritance during densification.

Besides densification, pruning operations may also be used as a part of the adaptive density control strategy. The pruning operation may periodically reset the opacity of all splats close to zero and remove points with opacity below a threshold, as detailed in [REF. 2]. This technique is effective in suppressing floating artifacts, however, such pruning can also cause problems in a dynamic scene. For instance, regions of the face that are often occluded (such as eyeball triangles), can be overly sensitive to this pruning strategy, and often end up with few or no attached Gaussians. To prevent this, the adapting may comprise checking that the pruning does not remove a last geometric primitive of a triangle. For instance, the creating method may keep track of the number of splats attached to each triangle, and ensure that every triangle always has at least one splat attached and deny local pruning otherwise.

Adaptive density control is schematically illustrated in item ④ of Fig. 1. As mentioned above, adaptive density control may be carried out at any appropriate stage of the creating method. However, for performance reasons, it is desirable to implement at least part of the learning of the geometric primitive parameters before implementing adaptive density control.

An example of a learning strategy is now described. In some embodiment, the learning comprises rendering an image based on values of the parameters of the associated geometric primitives at a current iteration, comparing the rendered image with a ground-truth image from the at least one image set, and updating the values of the parameters to increase similarity between the rendered image and the ground-truth image. In Fig. 1, the image shown at reference 24 illustrates a rendered image after initialization of the 3D Gaussians. As can be seen, all the geometric primitives are centered in their respective triangles and have the same scale and the same color. As the case may be, more complex initializations may however be contemplated.

Reference 26 shows the same avatar after learning iterations. Increasing similarity may include minimizing color loss between the ground-truth image (from the video 10) and the rendered image 26. To obtain the rendered image 26, the geometric primitives may be rendered at the same viewpoint as the ground-truth image in order to facilitate comparison.

For instance, the learning may supervise the rendered images 26 with a combination of an $\mathcal{L}_1$ term and a D-SSIM term following [REF. 2]:

$$\mathcal{L}_{\text{rgb}} = (1 - \lambda)\mathcal{L}_1 + \lambda\mathcal{L}_{\text{D-SSIM}}, \tag{7}$$

with e.g. $\lambda$=0.2. This already results in good re-rendering quality without additional supervision such as depth or silhouette supervision. However, when trying to animate these splats via FLAME [REF. 3] to novel expressions and poses, large spike- and blob-like artifacts may appear wildly throughout the scene. The inventors attribute this deficiency to a poor alignment between the Gaussians and the triangles and propose that a loss function used in the learning comprises at least one of a position term penalizing a distance between a geometric primitive and a cell associated thereto, and a scaling term penalizing a scaling difference between a geometric primitive and a cell associated thereto, optionally wherein at least one of the position term and/or the scaling term includes a tolerance under which said term has a fixed value.

As regards the position term, a basic hypothesis behind 3D Gaussian rigging is that the Gaussians should roughly match the underlying mesh. They should also match their locations; for instance a Gaussian representing a spot on the nose should not be rigged to a triangle on the cheek. Although the splats are initialized at triangle centers, and new splats may be added nearby these existing ones, it is not guaranteed that the primitives remain close to their parent triangle after the learning. To address this, the local position of each Gaussian may be regularized by a position term in the loss function, e.g.:

$$\mathcal{L}_{\text{position}} = \| \max \left( \mu, \epsilon_{\text{position}} \right) \|_2, \tag{8}$$

where $\varepsilon_{\text{position}} = 1$ is a threshold (tolerance) that tolerates small errors within the scaling of its parent triangle. This adds robustness and helps to avoid cracks and fly-around blobs when the avatar is animated with novel expressions and poses.

As regards the scaling term, if a 3D Gaussian is large in comparison to its parent triangle, small rotations of the triangle - barely noticeable at the scale of the triangle - will be magnified by the scale of the 3D Gaussian, resulting in unpleasant jittering artifacts. To mitigate this, the local scale of each 3D Gaussian may be regularized by a scaling term in the loss function, e.g.:

$$\mathcal{L}_{\text{scaling}} = \| \max \left( s, \epsilon_{\text{scaling}} \right) \|_2, \tag{9}$$

where $\varepsilon_{\text{scaling}} = 0.6$ is a threshold (tolerance) that disables the scaling loss term when the scale of a Gaussian less than $0.6\times$ the scale of its parent triangle. This $\varepsilon_{\text{scaling}}$-tolerance is helpful to prevent the Gaussians from shrinking excessively, causing rendering speeds to deteriorate, as camera rays need to hit more splats to before zero transmittance is reached, and difficulty to construct opaque surfaces to handle occlusions.

Of course, the above values of the tolerances are merely examples and may be tuned appropriately by the skilled person.

Thus, the final loss function may be expressed as:

$$\mathcal{L} = \mathcal{L}_{\text{rgb}} + \lambda_{\text{position}}\mathcal{L}_{\text{position}} + \lambda_{\text{scaling}}\mathcal{L}_{\text{scaling}}, \tag{10}$$

where $\lambda_{\text{position}} = 0.01$ and $\lambda_{\text{scaling}} = 1$. Note that the terms $\mathcal{L}_{\text{position}}$ and $\mathcal{L}_{\text{scaling}}$ may be applied only to visible splats. Thereby, the creating method only regularizes points when the color loss $\mathcal{L}_{rgb}$ is present. This helps to maintain the learned structure of often-occluded regions such as teeth and eyeballs.

Update of the parameters during learning leads to a change of the properties of the geometric primitive 22, as illustrated in item ③ of Fig. 1. The updated parameters may include the position, orientation, scale, SH coefficient (color) and/or opacity of the geometric primitive. However, as mentioned above, the learning may keep constant the allocation of the geometric primitives to the cells of the mesh, e.g. the parent index $i$.

An implementation example is now described. That example uses Adam [REF. 5] for parameter optimization, namely for the learning step. With a plurality of subjects, the same hyperparameter values may be used across all subjects. The learning rate is set to 5e-3 for the position and 1.7e-2 for the scaling of 3D Gaussians, and the rest of the parameters have the same learning rates as 3D Gaussian Splatting [REF. 2].

In this example, the learning comprises fine-tuning parameters of the parametric morphable model and/or parameters of the model configured to obtain the parametric morphable model of the animated subject from the at least one image set, jointly and end-to-end with the learning of the parameters of the associated geometric primitives. For instance, alongside the Gaussian parameters, the creating method also fine-tunes the translation, joint pose (joint rotation), and expression parameters of the model for each time step, for instance using learning rates 1e-6, 1e-5, and 1e-3, respectively.

In this example, the learning comprises 600,000 iterations. The method may exponentially decay the learning rate for the splat positions until the final iteration, where it reaches a certain fraction of the initial value (e.g. $0.01\times$ the initial value). Adaptive density control with binding inheritance is performed every 2,000 iterations, from iteration 10,000 until the end. Every 60,000 iterations, the Gaussians' opacities are reset. A photometric head tracker may be used to obtain the FLAME parameters, including shape $\beta$, translation t, pose $\theta$, expression $\psi$, and vertex offset $\Delta v$ in the canonical space.

Triangles for the upper and lower teeth, which are rigid to the neck and jaw joints, respectively, may be manually added; this applies, more generally, to any rigid part of the animated subject.

Using these settings, the inventors have carried out experiments on multi-view video recordings covering the front and sides of heads of human subjects, in order evaluate the created avatars on three tasks: 1) *novel-view synthesis:* driving an avatar with head poses and expressions from training sequences and rendering from a held-out viewpoint; 2) *self-reenactment*: driving an avatar with unseen poses and expressions from a held-out sequence of the same subject and rendering all camera views; 3) *cross-identity reenactment*: animating an avatar with unseen poses and expressions from another identity.

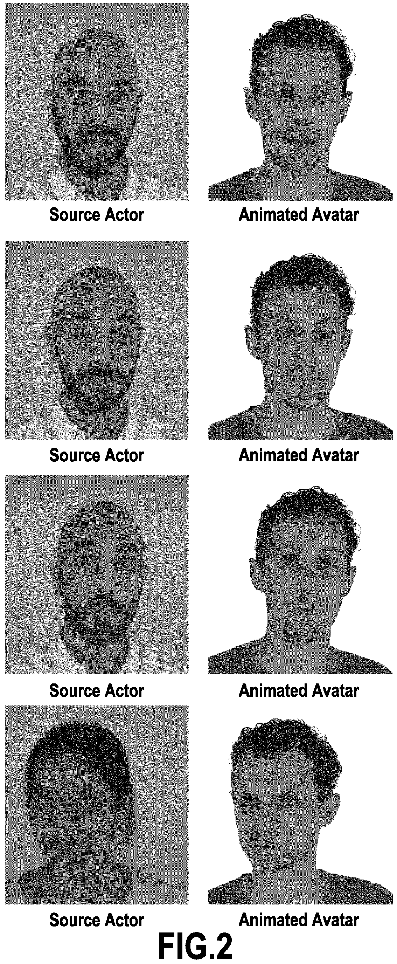

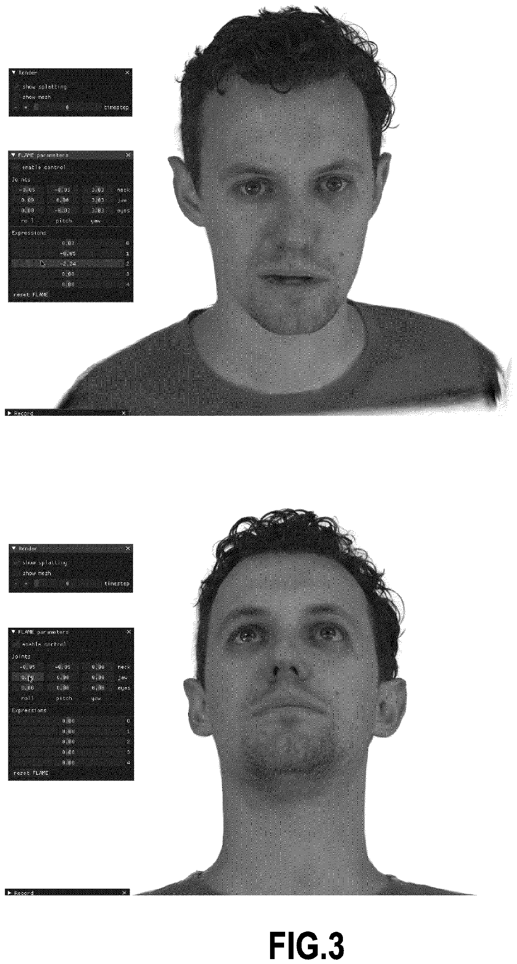

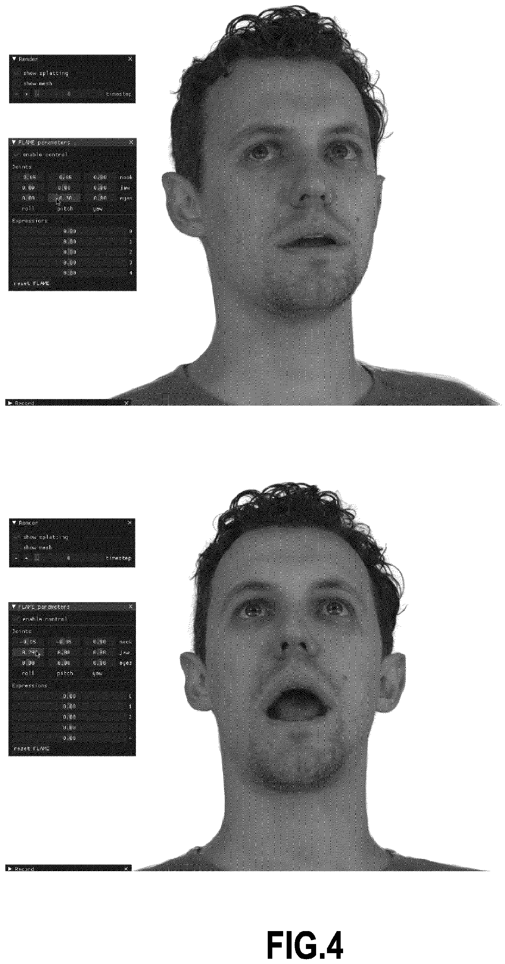

Qualitative and quantitative comparisons with baselines show that the proposed creating method outperforms state-of-the-art approaches. The performance of the proposed creating method is illustrated in Figs. 2-4. Figure 2 shows four examples of cross-identity reenactment, where the left image is an image by a source actor and the right image is a rendering of the created avatar for another identity. As can be seen, the avatars accurately reproduce eye and mouth movements from source actors showing lively, complex dynamics such as wrinkles. Figures 3 and 4 show four examples of novel-view synthesis, where the parameters of the underlying mesh enable to obtain new expressions and new viewpoints. This evidences the controllability of the created avatar.

In addition, the benefits of adapting the local density of the geometric primitives is evidenced by comparing the first rendered image 26 in Fig. 1 (above item), which was obtained without adaptive density control, and the second rendered image 28 in Fig. 1 (above item) which was obtained with adaptive density control and binding inheritance. As can be seen, the second rendered image 28 is more detailed and consistent than the first rendered image 26 in many aspects, such as the details of the hair, the uniformity of the T-shirt, etc.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A computer-implemented method for creating a controllable avatar of an animated subject from at least one image set (10) of the animated subject, the method comprising:

    - associating geometric primitives (22) to a parametric morphable model (20) of the animated subject;
    - learning parameters of the associated geometric primitives (22) based on the at least one image set (10).

2. The method of claim 1, wherein the associating comprises positioning the geometric primitives (22) in respective local reference frames bound to points of the model (20), said positioning being defined by values of the parameters.

3. The method of claim 1 or 2, wherein the geometric primitives (22) are discrete, the model (20) comprises a mesh, and the associating comprises allocating each one of the geometric primitives (22) to a cell of the mesh while enabling the geometric primitive to move and deform with the cell.

4. The method of claim 3, wherein the learning keeps constant the allocation of the geometric primitives (22) to the cells of the mesh.

5. The method of claim 3 or 4, wherein the parameters comprise scaling information of the geometric primitive (22) with respect to a scaling of an associated cell thereof.

6. The method of any one of claims 1 to 5, wherein the learning comprises updating values of the parameters in a global reference frame of the model.

7. The method of any one of claims 1 to 6, wherein the geometric primitives (22) comprise three-dimensional Gaussians.

8. The method of any one of claims 1 to 7, comprising adapting a local density of the geometric primitives (22).

9. The method of claim 8, wherein the adapting comprises adding a second geometric primitive (22) to a local reference frame already having a first geometric primitive (22) allocated thereto, optionally wherein the second geometric primitive (22) is allocated to said local reference frame.

**10.** The method of claim 8 or 9, wherein the adapting comprises pruning geometric primitives (22) and checking that the pruning does not remove a last geometric primitive of a cell.

**11.** The method of any one of claims 1 to 10, wherein the learning comprises rendering an image (26) based on values of the parameters of the associated geometric primitives at a current iteration, comparing the rendered image with a ground-truth image from the at least one image set (10), and updating the values of the parameters to increase similarity between the rendered image and the ground-truth image.

**12.** The method of any one of claims 1 to 11, comprising obtaining the parametric morphable model of the animated subject from the at least one image set (10).

**13.** The method of claim 12, wherein the learning comprises fine-tuning parameters of the parametric morphable model and/or parameters of a model configured to obtain the parametric morphable model of the animated subject from the at least one image set (10), optionally jointly and end-to-end with the learning of the parameters of the associated geometric primitives (22).

**14.** The method of any one of claims 1 to 13, wherein a loss function used in the learning comprises at least one of a position term penalizing a distance between a geometric primitive and a cell associated thereto, and a scaling term penalizing a scaling difference between a geometric primitive and a cell associated thereto, optionally wherein at least one of the position term and/or the scaling term includes a tolerance under which said term has a fixed value.

**15.** A computer program set including instructions for executing the steps of the method of any one of claims 1 to 14 when said program set is executed by at least one computer.

**16.** A recording medium readable by at least one computer and having recorded thereon at least one computer program including instructions for executing the steps of the method of any one of claims 1 to 14.

FIG.1

Source Actor    Animated Avatar

Source Actor    Animated Avatar

Source Actor    Animated Avatar

Source Actor    Animated Avatar

# FIG.2

# FIG.3

# FIG.4

Europäisches
Patentamt
European
Patent Office
Office européen
des brevets

# EUROPEAN SEARCH REPORT

**Application Number**

EP 23 21 3823

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LOMBARDI STEPHEN STEPHEN LOMBARDI@FB COM ET AL: "Mixture of volumetric primitives for efficient neural rendering", ACM TRANSACTIONS ON GRAPHICS, ACM, NY, US, vol. 40, no. 4, 19 July 2021 (2021-07-19), pages 1-13, XP058628511, ISSN: 0730-0301, DOI: 10.1145/3450626.3459863 * Section 3.1.1, 3.1.2, 3.1.3, 3.2.2, 3.3 and 4.3 Motion model architecture; figures 2,4 * | 1-16 | INV. G06T13/40 G06T17/00 |
| X | WO 2022/164660 A1 (META PLATFORMS TECH LLC [US]) 4 August 2022 (2022-08-04) * paragraphs [0028], [0053], [0057], [0059]; claim 1; figures 4-7 * | 1-16 | |
| A | US 2003/052878 A1 (HAN MAHN-JIN [KR] ET AL) 20 March 2003 (2003-03-20) * paragraphs [0025] - [0027], [0029], [0031] * | 1-16 | |
| A | US 11 682 166 B2 (ADOBE INC [US]) 20 June 2023 (2023-06-20) * column 1, lines 25-53; figure 2 * | 1-16 | TECHNICAL FIELDS SEARCHED (IPC)<br><br>G06T<br>G06V |

The present search report has been drawn up for all claims

| Place of search | Date of completion of the search | Examiner |
|---|---|---|
| The Hague | 25 April 2024 | Meurisse, Wim |

EPO FORM 1503 03.82 (P04C01)

## ANNEX TO THE EUROPEAN SEARCH REPORT
## ON EUROPEAN PATENT APPLICATION NO.

EP 23 21 3823

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2024

| Patent document cited in search report | Publication date | Patent family member(s) | | Publication date |
|---|---|---|---|---|
| WO 2022164660 A1 | 04-08-2022 | NONE | | |
| US 2003052878 A1 | 20-03-2003 | CA | 2391670 A1 | 29-12-2002 |
| | | CN | 1395221 A | 05-02-2003 |
| | | EP | 1271411 A2 | 02-01-2003 |
| | | EP | 1744282 A2 | 17-01-2007 |
| | | JP | 3981302 B2 | 26-09-2007 |
| | | JP | 2003077004 A | 14-03-2003 |
| | | KR | 20030004017 A | 14-01-2003 |
| | | RU | 2215326 C2 | 27-10-2003 |
| | | US | 2003052878 A1 | 20-03-2003 |
| US 11682166 B2 | 20-06-2023 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BEN MILDENHALL** ; **PRATUL P SRINIVASAN** ; **MATTHEW TANCIK** ; **JONATHAN T BARRON** ; **RAVI RAMAMOORTHI** ; **REN NG**. NeRF: Representing scenes as neural radiance fields for view synthesis. *Communications of the ACM*, 2021, vol. 65 (1), 99-106
- **BERNHARD KERBL** ; **GEORGIOS KOPANAS** ; **THOMAS LEIMKÜHLER** ; **GEORGE DRETTAKIS**. 3D Gaussian splatting for real-time radiance field rendering. *ACM Transactions on Graphics (ToG)*, 2023, vol. 42 (4), 1-14
- **TIANYE LI** ; **TIMO BOLKART** ; **MICHAEL. J. BLACK** ; **HAO LI** ; **JAVIER ROMERO**. Learning a model of facial shape and expression from 4D scans. *ACM Transactions on Graphics, (Proc. SIGGRAPH Asia)*, 2017, vol. 36 (6), 194-1, 194-17
- **JUSTUS THIES** ; **MICHAEL ZOLLHOFER** ; **MARC STAMMINGER** ; **CHRISTIAN THEOBALT** ; **MATTHIAS NIEßNER**. Real-time face capture and reenactment of rgb videos. *Proceedings of the IEEE conference on computer vision and pattern recognition*, 2016, 2387-2395
- **DIEDERIK P KINGMA** ; **JIMMY BA**. Adam: A method for stochastic optimization. *arXiv: 1412.6980*, 2014
- **MATTHEW LOPER** ; **NAUREEN MAHMOOD** ; **JAVIER ROMERO** ; **GERARD PONS-MOLL** ; **MICHAEL J. BLACK**. SMPL: A Skinned Multi-Person Linear Model. *ACM Transactions on Graphics, (Proc. SIGGRAPH Asia)*, 2015, vol. 34 (6), 248-1, 248-16